# EUROPÄISCHE PATENTSCHRIFT

(11) **EP 2 101 102 B1**
(45) Veröffentlichungstag und Bekanntmachung des Hinweises auf die Patenterteilung: **07.10.2015**
(21) Anmeldenummer: 09154398.3
(22) Anmeldetag: 05.03.2009
(51) Int. Cl.: F16N 7/38

(54) **Intelligente Enddruckwächtereinheit**
Intelligent end pressure monitor unit
Unité intelligente de surveillance de la pression finale

(30) Priorität: 14.03.2008 DE 102008014448
(43) Veröffentlichungstag der Anmeldung: 16.09.2009
(73) Patentinhaber: SKF Lubrication Systems Germany GmbH, 69190 Walldorf (DE)
(72) Erfinder: Günther, Armin, 74921, Helmstadt-Bargen (DE)
(74) Vertreter: Keil & Schaafhausen Patent- und Rechtsanwälte

(56) Entgegenhaltungen:
- DE-A1- 10 318 671
- DE-A1-102004 032 453
- JP-A- 6 201 093

## Beschreibung

Die Erfindung betrifft eine intelligente Enddruckwächtereinheit, insbesondere einen als Enddruckwächtereinheit ausgebildeten Druckwächter, für eine Schmieranlage bzw. ein Schmierstoffverteilersystem, das mit wenigstens einem Schmierstoffverteiler ausgestattet ist, welcher an wenigstens zwei Versorgungsleitungen für die Versorgung des Schmierstoffverteilers mit Schmierstoff angeschlossen ist. Die Versorgungsleitungen sind an eine mittels einer Pumpe mit Druck beaufschlagbare Umsteuerung zur abwechselnden Druckbeaufschlagung der Versorgungsleitungen angeschlossen. Die Erfindung bezeiht sich auch auf ein mit dem Druckwächter ausgestattetes Schmierstoffverteilersystem bzw. eine entsprechende ausgestattete Schmieranlage sowie ein in dem Druckwächter implementiertes Verfahren zum Betreiben des Schmierstoffverteilersystems bzw. der Schmieranlage.

Schmieranlagen mit einem derartigen Zweileitungssystem werden verwendet, um Schmierstellen wie Lager, Gelenke, bewegliche Teile oder dgl. z.B. in Maschinen zuverlässig zu schmieren. Durch die Umsteuerung werden die Versorgungsleitungen des Zweileitungssystems abwechselnd mit Druck beaufschlagt bzw. entlastet, um dadurch den Schmierstoff über Schmierleitungen an eine Schmierstelle zu befördern.

Eine gattungsgemäße Schmieranlage ist aus der Druckschrift DE 10 2004 032 453 A1 bekannt. Bei dieser Schmieranlage ist in der an den Schmierstoffverteiler angeschlossenen Schmierleitung ein Drucksensor angeordnet, welcher eine Überwachung der ordnungsgemäßen Funktion der Schmieranlage anhand charakteristischer Druckverläufe nach Umsteuervorgängen ermöglicht. Zusätzlich sind zwei separate Drucksensoren in den Versorgungsleitungen vorgesehen, wobei sämtliche Drucksensoren mit einem Auswertemodul verbunden sind. Über dieses Auswertemodul kann der Umsteuerdruck und/oder ein Betrieb der Pumpe gesteuert werden.

Aus der JP 6 201093 A ist ein Druckwächter in einer Schmiermittelzufuhrleitung bekannt, der zwei Drucksensoren aufweist, die an eine gemeinsame Ein-Ausgabe-Einrichtung angeschlossen sind, welche ihrerseits mit einem Rechner in Verbindung steht, der die Durchschnittsdruckwerte der Drucksensoren aufzeichnet und durch Vergleich mit einer Minimalschwelle überwacht.

Die DE 103 18 671 A1 beschreibt eine Zentralschmieranlage, bei der Schmierstoff aus einem Vorratsbehälter mittels einer Pumpe durch Zufuhrleitungen an Verteiler transportiert wird. In der Anlage sind als Leitungsbruchwächter Drucksensoren zur Überwachung des Drucks und zur Detektion des Druckabfalls in der zugeordneten Leitung vorgesehen, die den herrschenden Druck mit einem bestimmten Minimaldruck vergleichen. Dies erfolgt in einer zentralen Auswerteeinrichtung, an die auch ein Aktuator angeschlossen sein kann, der mechanisch mit einem Dosierkolben des Verteilers gekoppelt sein kann, um bei jedem Kolbenhub ein Signal an die Auswerteeinrichtung auszugeben.

Aufgabe der vorliegenden Erfindung ist es, einen vereinfachten, möglichst kostengünstigen Aufbau für einen Druckwächter bzw. ein Schmierstoffverteilersystem vorzuschlagen, mit welchem insbesondere ein Verfahren zur Überwachung des Schmierstoffverteilersystems vereinfacht wird.

Diese Aufgabe wird erfindungsgemäß durch einen Druckwächter mit einem Schmierstoffverteilersystem mit den Merkmalen des Anspruches 1 gelöst. Vorteilhafte Ausgestaltungen und Weiterbildungen sind in den jeweiligen abhängigen Ansprüchen angegeben.

Bei einem Druckwächter der eingangs genannten Art sind erfindungsgemäß mindestens zwei Druckmesszellen mit einem gemeinsamen Messsignalwandler zur Umwandlung der Druckmesszellenrohsignale in Drucksignale sowie zumindest in ein Differenzsignal vorgesehen. Dies ermöglicht es, auf herkömmliche Drucksensoren mit einer zusätzlich erforderlichen Auswerteeinheit zu verzichten. Durch den gemeinsamen Messsignalwandler kann eine deutliche Kosteneinsparung erzielt werden. Ferner hat sich herausgestellt, dass auf ein Messsignal eines Drucksensors, der entsprechend dem Stand der Technik in der an den Schmierstoffverteiler angeschlossenen Schmierleitung vorgesehenen war, sogar verzichtet werden kann, wenn eine Überwachung anhand der Druckwerte in den Versorgungsleitungen vorgenommen wird. Daher ermöglicht die erfindungsgemäße Lösung vorteilhafter Weise einen Verzicht auf die Auswerteeinheit und den ansonsten in der Schmierleitung angeordneten weiteren Drucksensor sowie den damit verbundenen apparativen und finanziellen Aufwand. Mit dem erfindungsgemäßen Druckwächter sind bestehende Schmieranlagen auch einfach nachrüstbar. Da die Druckmesszellen in derselben Auswerteeinheit verarbeitet werden, kann ein Differenzsignal auch bereits aus den Druckmesszellenrohsignalen gebildet werden, ohne eine vorherige Umrechnung bzw. Umwandlung in Druckwerte und/oder digitale Daten vornehmen zu müssen.

Ferner wird die Überwachung des Schmierstoffverteilersystems vereinfacht, indem der Druckwächter einen insbesondere digitalen Eingang zum Anschluss wenigstens eines Schmierstoffsensors aufweist. Der Schmierstoffsensor ermöglicht beispielsweise eine direkte Kontrolle des Schmierergebnisses. Dadurch kann eine Plausibilitätskontrolle der mit den Druckmesszellen ermittelten Drücke bzw. Druckverläufe vorgenommen werden. Darüber hinaus kann das Steuerverhalten des Druckwächters selbstlernend ausgestaltet werden. Insbesondere ist dazu eine Eingabe durch einen Benutzer nicht notwendig. Für einen derartigen Lernvorgang kann z.B. vorgesehen sein, einen Schmierstoffsensor lediglich während einer Lernphase an den Druckwächter anzuschließen und ansonsten darauf zu verzichten. Dadurch kann ein einziger Näherungssensor zum Trainieren verschiedener Druckwächter vorgesehen werden. Für einen lernfähigen Druckwächter wird beispielsweise eine auf neuronalen Netzen und/oder Fuzzy-Verfahren basierende Auswertung verwendet.

Als Druckmesszellen werden beispielsweise Drucksensorelemente verwendet, welche ein elektrisches Ausgangssignal liefern. Besonders geeignete Beispiele hierfür sind Drucksensorelemente, die nach dem piezoresistiven, piezoelektrischen, kapazitiven, induktiven oder Hall-Prinzip arbeiten. Derartige Sensoren weisen oftmals einen nichtlinearen Zusammenhang zwischen dem zu messenden Druck und dem elektrischen Ausgangssignal auf, welcher üblicherweise durch eine Auswerteeinheit bei der Umwandlung in einen Druckwert berücksichtigt werden muss. Dies kann in dem Messsignalwandler erfolgen, wobei die insbesondere elektrischen Druckmesszellenrohsignale in analoge oder digitale Drucksignale umgewandelt werden. Bei dem Differenzsignal kann es sich ebenfalls sowohl um ein analoges als auch um ein digitales Signal handeln. Insbesondere können bei Verwendung von mehr als zwei Druckmesszellen, z. B. mehr als zwei Versorgungsleitungen, jeweils paarweise mehr als zwei Differenzsignale gebildet werden. Auch kann das Schmierstoffverteilersystem mehr als zwei Versorgungsleitungen und mehr als eine Schmierleitung aufweisen. In der Schmierleitung können zur kaskadierten Schmierung auch Verzweigungen vorgesehen sein.

Für eine einfache Überwachung des Schmierstoffverteilersystems ist es günstig, wenn der Druckwächter eine Anzeige zur Darstellung der Drucksignale und des Differenzsignals aufweist. Insbesondere dient die Anzeige auch als Benutzerschnittstelle zur Eingabe bzw. Änderung von Betriebsparametern. Beispielsweise kann über die Anzeige bzw. über zusätzlich vorgesehene Funktions- bzw. Einstelltasten ein gewünschter Umsteuerdruck oder Betriebsdruck vorgegeben werden.

Alternativ oder zusätzlich ist vorgesehen, dass der Druckwächter wenigstens ein Kommunikationsmodul zur drahtgebundenen oder drahtlosen Datenübertragung aufweist. Dies ermöglicht eine Abfrage zumindest der Drucksignale und des Differenzsignals und/oder eine Eingabe von Betriebsparametern durch einen Nutzer. Darüber hinaus ist eine Fernüberwachung möglich, was insbesondere bei weitläufigen zu schmierenden Anlagen günstig ist, da die Überwachung zentral erfolgen kann. Im Falle einer zentralen Überwachung könnte auf die Anzeige am Druckwächter selbst auch verzichtet werden, was eine Kostenersparnis zur Folge hat und unerwünschte Manipulationen des Druckwächters erschwert, weil gezielte Änderungen zur in der Zentrale durchgeführt werden.

Gemäß einer Weiterberbildung des Druckwächters können die Druckmesszellen an jeweils einem Analogeingang des Druckwächters angeschlossen sein. Der Anschluss ist dabei vorzugsweise lösbar ausgebildet, so dass eine Druckmesszelle im Falle eines Defektes einfach ausgewechselt werden kann.

Der Messsignalwandler ist insbesondere als Analog-Digitalwandler ausgestaltet. Es kann jedoch auch vorgesehen sein, mittels einer analogen elektronischen Schaltung die Druckmesszellenrohsignale in analoge elektrische Signale umzusetzen, deren Spannung beispielsweise linear mit dem Druckwert skaliert.

Der Schmierstoffsensorkann insbesondere als Näherungsschalter ausgebildet sein.

Der digitale Eingang oder analoge Eingang einer Druckmesszelle kann auch durch das Kommunikationsmoduls für die Ferndatenübertragung realisiert sein. So kann ein Signal eines Näherungsschalters bzw. Schmierstoffsensors, welcher entfernt von dem Druckwächter angeordnet ist, per Funk übermittelt werden. Dies vereinfacht den nachträglichen Einbau des Druckwächters in bestehende Schmieranlagen.

Eine vereinfachte Messsignalwandlung wird ermöglicht, wenn die Druckmesszellen Bestandteil eines Differenzdrucksensors sind. Dieser ist beispielsweise so ausgestaltet, dass die auf die jeweiligen Druckmesszellen wirkenden Drücke auf eine beispielsweise zwischen den Druckmessezellen angeordnete Membran beiderseits einwirken, so dass der Differenzdruck direkt als Rohsignal gemessen werden kann. Als Differenzdrucksensor kann ein mikromechanischer Messaufnehmer verwendet werden.

Gemäß einer Ausgestaltung des Druckwächters ist vorgesehen, dass dieser wenigstens einen Steuerausgang aufweist. Dieser kann beispielsweise dazu verwendet werden, die Umsteuerung und/oder die Pumpe anzusteuern. Der Ausgang kann sowohl analog als auch digital ausgestaltet sein.

Dabei ist insbesondere vorgesehen, dass der Steuerausgang von einer Steuereinrichtung des Druckwächters mit einem Steuersignal beaufschlagbar ist, das vorzugsweise aus einer Gruppe von Signalen umfassend ein Triggersignal, ein Rechtecksignal, ein ansteigende Flanke oder eine abfallende Flanke ausgewählt wird. Bei einem digitalen Steuerausgang werden beispielsweise Signalpegel von 0 bzw. 24 V verwendet. Zum Anschluss eines Kommunikationsmoduls für die drahtlose Datenübertragung kann der Steuerausgang auch als Funkkanal ausgestaltet sein. An Stelle von Spannungssignalen werden dann entsprechende Funk-Datentelegramme mit Steuersignalen übermittelt. Dies ist insbesondere günstig, wenn das zu steuernde Bauteil, beispielsweise eine Pumpe, entfernt von dem Druckwächter angeordnet ist oder mit einer Verkabelung schlecht erreichbar ist.

Die Erfindung betrifft ferner ein Schmierstoffverteilersystem mit wenigstens einem Schmierstoffverteiler, welcher an wenigstens zwei Versorgungsleitungen für die Versorgung des Schmierstoffverteilers mit Schmierstoff angeschlossen ist, die an eine mit einer Pumpe druckbeaufschlagbare Umsteuerung zur abwechselnden Druckbeaufschlagung der Versorgungsleitungen angeschlossen sind. Das Schmierstoffverteilersystem weist wenigstens einen Druckwächter, insbesondere gemäß einer der vorstehend beschriebenen Ausgestaltungen, auf, der wenigstens zwei Druckmesszellen mit einem Messsignalwandler zur Umwandlung der Druckmesszellenrohsignale in Drucksignale sowie zumindest ein Differenzsignal aufweist. Vorteilhafterweise kann dabei auf eine separate Auswerteeinheit und/oder einen in der Schmierstoffleitung vorgesehenen Drucksensor verzichtet werden.

Die Druckmesszellen sind vorzugsweise zur Bestimmung wenigstens einer zwischen jeweils zwei Versorgungsleitungen herrschenden Druckdifferenz angeordnet. Z. B. sind die Druckmesszellen dazu in oder an den Versorgungsleitungen zwischen der Umsteuerung und dem Schmierstoffverteiler angebracht. Im Falle der Verwendung eines Differenzdrucksensors sind die Druckmesszellen vorzugsweise in einem gemeinsamen Bauteil untergebracht.

Gemäß einer Weiterbildung des Schmierstoffverteilersystem umfasst dieses wenigstens einen als Näherungssensor ausgestalteten Schmierstoffsensor. Der Schmierstoffsensor arbeitet vorzugsweise berührungslos, beispielsweise kapazitiv, mittels Ultraschall oder optisch. Der Schmierstoffsensor kann an den insbesondere digitalen Eingang des Druckwächters angeschlossen sein.

In einem Schmierstoffverteilersystem mit mehreren Druckwächtern ist es vorteilhaft, mehrere in einer insbesondere drahtlosen Kommunikationsverbindung miteinander stehende Druckwächter und/oder Schmierstoffsensoren vorzusehen. Beispielsweise kann durch die Kommunikation der Druckwächter untereinander eine weitere Plausibilitätskontrolle der ermittelten Druckwerte und der daraus abzuleitenden Steuersignale erfolgen. Insbesondere kann vorgesehen sein, das Lernverhalten eines Druckwächters mit einem zugeordneten Schmierstoffsensor auf einen oder mehrere weitere Druckwächter insbesondere per Funk zu übertragen. Dies ermöglicht Synergieeffekte dahingehend, dass die Anzahl der vorzusehenden Schmierstoffsensoren im Vergleich zu der Anzahl der Druckwächter reduziert werden kann. Darüber hinaus lässt sich ein schnelleres Einstellverhalten und eine schnellere Reaktion auf geänderte Betriebsbedingungen, wie beispielsweise auf die Viskosität des Schmierstoffes Einfluss nehmende Temperaturen, ermöglichen.

Im Folgenden wird ein erfindungsgemäßes Verfahren zum Betreiben eines derartigen Schmierstoffverteilersystems beschrieben. Bei einem erfindungsgemäßen Verfahren zum Betreiben eines Schmierstoffverteilersystems, insbesondere in einer der vorstehend beschriebenen Ausgestaltungen, wird mit wenigstens einem Schmierstoffverteiler zur Schmierstoffverteilung auf wenigstens eine daran angeschlossene Schmierstoffleitung, welche an wenigstens zwei Versorgungsleitungen angeschlossen ist, mit einer Pumpe Schmierstoff in eine von der Umsteuerung aktivierte Versorgungsleitung gefördert, welche dadurch druckbeaufschlagt wird und nach einer Umsteuerung bei einem Umsteuerdruck deaktiviert und dadurch entlastet wird, wobei der Entlastungsdruck in der entlasteten Versorgungsleitung gemessen wird und der Umsteuerdruck für eine zukünftige Umsteuerung in Abhängigkeit des Entlastungsdruckes festgelegt wird. Insbesondere werden sämtliche für die Festlegung des Umsteuerdruckes gemessenen Druckwerte in den Versorgungsleitungen gemessen. Vorteilhafterweise ist es nicht erforderlich, einen weiteren Druckwert in der Schmierleitung zu messen. Dadurch können sowohl der bauliche Aufwand als auch der mit dem Verfahren zur Überwachung des Schmierstoffverteilersystems verbundene Aufwand vermindert werden.

Zur Gewährleistung eines guten Schmierergebnisses und/oder zur Vermeidung eines Überdruckes ist gemäß einer Weiterbildung des Verfahrens vorgesehen, dass nach einer Umsteuerung der Druck in der belasteten Versorgungsleitung gemessen wird und bei Erreichen des Umsteuerdruckes eine weitere Umsteuerung und/oder eine Deaktivierung der Pumpe vorgenommen wird.

Gemäß einer Ausgestaltung des Verfahrens wird nach einer Umsteuerung die Förderung von Schmierstoff mit der Pumpe für eine Pausenzeit eingestellt. Die Pausenzeit kann dabei fest eingestellt werden. Es kann jedoch auch vorgesehen sein, die Pausenzeit beispielsweise angepasst an eine zeitliche Änderung des Drucks bei einem Belastungs- oder Entlastungsvorgang zu variieren.

Für eine Anpassung des Schmierverhaltens an eine unter äußeren Bedingungen geänderte Viskosität des Schmierstoffes kann es günstig sein, dass der Umsteuerdruck anhand eines vorgegebenen Differenzdruckes zum Entlastungsdruck vorgegeben wird. Bei einer geringen Viskosität in Folge beispielsweise einer erhöhten Temperatur sinkt der Druck in einer Entlastungsphase im Allgemeinen schneller ab, so dass in einer gleichen Zeit ein niedrigerer Entlastungsdruck erreicht wird, und auf Grund der niedrigen Viskosität lediglich ein geringerer Druck zum zuverlässigen Schmieren erforderlich ist. Unter warmen Bedingungen wird beispielsweise das erste Rohr bis auf 80 bar entlastet und ein Differenzdruck von 40 bar eingestellt, so dass das andere Rohr auf 120 bar druckbeaufschlagt wird. Bei einer geringeren Temperatur mit einer demzufolge höheren Viskosität erfolgt eine Entlastung nur noch auf lediglich 100 bar, so dass der Druck in einer Pumpphase um den Differenzdruck von 40 bar auf 140 bar angehoben wird. Daher kann eine bedarfsgerechte und energieeffiziente Anpassung des Schmierstoffverteilersystems an die äußeren Bedingungen ermöglicht werden.

Eine schnellere Anpassung des Schmierstoffverteilersystem auf äußere Bedingungen wie die geänderte Viskosität des Schmierstoffs wird beispielsweise ermöglicht, wenn der Umsteuerdruck in Abhängigkeit einer zeitlichen Änderung des in einer Entlastungsphase vorliegenden Entlastungsdruckes abgesenkt oder angehoben wird. Dadurch kann beispielsweise vermieden werden, dass unnötig lange Pausenzeiten bis zu einer erneuten Anpassung entstehen. Insbesondere kann auf diese Weise auch die vorstehend beschriebene Pausenzeit eingestellt werden.

Alternativ oder zusätzlich kann vorgesehen sein, dass der Umsteuerdruck in Abhängigkeit eines nach einer vorgegebenen Belastungszeit vorliegenden Belastungsdruckes abgesenkt oder angehoben wird. Dabei kann insbesondere auch die zeitliche Ableitung des Belastungsdruckes zur Festlegung des Umsteuerdruckes verwendet werden.

Wie bereits vorstehend dargestellt, kann bei dem Verfahren ein Schmiererfolg mittels wenigstens eines Schmiermittelsensors zumindest zeitweise überwacht werden und der Umsteuerdruck und/oder eine Deaktivierungszeit der Pumpe in Abhängigkeit des Überwachungsergebnisses verändert werden. Vorteilhafterweise wird das Überwachungsergebnis insbesondere drahtlos an einen zur Messung des Drucks in den jeweiligen Versorgungsleitungen verwendeten Druckwächter übermittelt. Dabei kann die Pumpe von einem zur Messung des Drucks in den jeweiligen Versorgungsleitungen verwendeten Druckwächter insbesondere drahtlos gesteuert werden.

Weitere Vorteile, Merkmale und Anwendungsmöglichkeiten der vorliegenden Erfindung ergeben sich auch aus der nachfolgenden Beschreibung eines Ausführungsbeispiels und der Zeichnung. Dabei bilden alle beschriebenen und bildlich dargestellten Merkmale den Gegenstand der vorliegenden Erfindung, auch unabhängig von Ihrer Zusammenfassung in den Ansprüchen oder deren Rückbezügen.

Es zeigen:

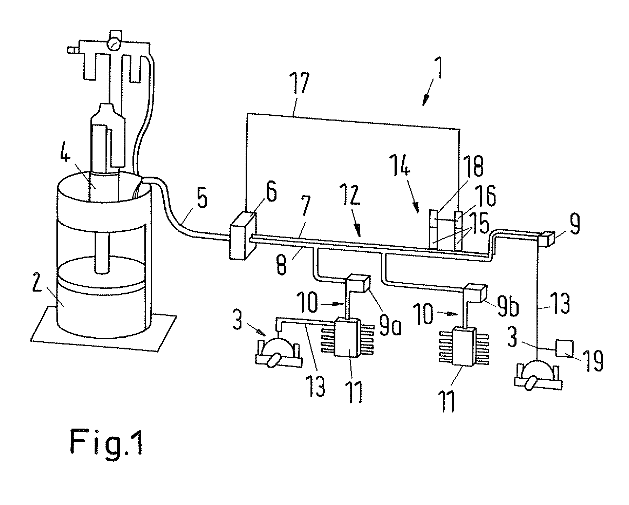

- Fig. 1: ein erfindungsgemäßes Schmierstofifverteilersystem und
- Fig. 2: einen erfindungsgemäßen Druckwächter.

Das erfindungsgemäße Schmierstoffverteilersystem 1 ist zur Verteilung von Schmierstoff aus einem Schmierstofffass 2 auf zwei exemplarisch gezeigte Schmierstellen 3 vorgesehen. Dazu wird mit einer Pumpe 4 der nicht dargestellte Schmierstoff in eine Anschlussleitung 5 gefördert, welche in eine Umsteuerung 6 mündet. An diese sind zwei Versorgungsleitungen 7, 8 für die Versorgung eines Schmierstoffverteilers 9 angeschlossen. Außerdem sind weitere Schmierstoffverteiler 9a und 9b vorgesehen, welche jeweils in einem Einleitungssystem 10 angeordnet sind. Diese Einleitungssysteme 10 weisen wiederum jeweils einen Progressivverteiler 11 auf. Im Unterschied zu den Schmierstoffverteilern 9a, 9b ist der Schmierstoffverteiler 9 Bestandteil eines Zweileitungssystems 12. Der Unterschied besteht u. a. darin, dass die zu der jeweiligen Schmierstelle 3 führende Schmierleitung 13 bei einem Einleitungssystem 10 lediglich von einer einzigen Versorgungsleitung 7 gespeist wird, wohingegen in einem Zweileitungssystem 12 zwei Versorgungsleitungen 7, 8 vorgesehen sind.

Die Pumpe 4 erzeugt einen Förderdruck, so dass die Anschlussleitung 5 mit Druck beaufschlagt ist. Mittels der Umsteuerung 6 können die Versorgungsleitungen 7, 8 alternierend jeweils mit dem in der Anschlussleitung 5 herrschenden Druck beaufschlagt werden, während die jeweils nicht beaufschlagte Leitung 7, 8 entlastet wird. Während einer Belastungsphase steigt der Druck in der ersten Anschlussleitung 7 beispielsweise auf 140 bar an, wohingegen der Druck in der zweiten Anschlussleitung 8 in der Phase der Entlastung auf beispielsweise 100 bar abfällt.

Für eine Überwachung der jeweiligen Drücke in den Versorgungsleitungen 7, 8 ist ein Druckwächter 14 vorgesehen, welcher zwei Druckmesszellen 15 aufweist. Diese sind an einen gemeinsamen Messsignalwandler 16 angeschlossen, mittels welchem die Druckmesszellenrohsignale in Drucksignale sowie zumindest in ein Differenzsignal umgewandelt werden können. Dadurch kann mit dem Druckwächter 14 ein Druckdifferenz zwischen der ersten Versorgungsleitung 7 und der zweiten Versorgungsleitung 8 ermittelt werden. Darüber hinaus können die absoluten Drücke in diesen Leitungen 7, 8 festgestellt werden. Ein weiterer Drucksensor in der Schmierleitung 13 ist für die Ansteuerung nicht erforderlich.

Anhand der mit den Druckmesszellen 15 gemessenen Druckwerte kann ein Umsteuerdruck für die Umsteuerung 6 vorgegeben werden. Dazu ist eine Signalleitung 17 zwischen der Umsteuerung 6 und dem gemeinsamen Messsignalwandler 16 vorgesehen. Alternativ kann zur Datenübertragung bzw. Signalübertragung auch ein Kommunikationsmodul 18 des Druckwächters 14 verwendet werden. Dieses Kommunikationsmodul 18 wird außerdem dazu verwendet, mit einem Schmierstoffsensor 19, welcher ein Näherungssensor ist, zu kommunizieren. Durch den Schmierstoffsensor 19 ist es möglich, die von dem Messsignalwandler 16 vorgenommene Steuerung bzw. die gemessenen Druckwerte auf Plausibilität zu überprüfen. Der Schmierstoffsensor 19 kann von der Schmierleitung 13 bzw. der Schmierstelle 3 entfernt werden, so dass dieser abwechselnd an verschiedenen Schmierstellen 3 zum Einsatz kommen kann.

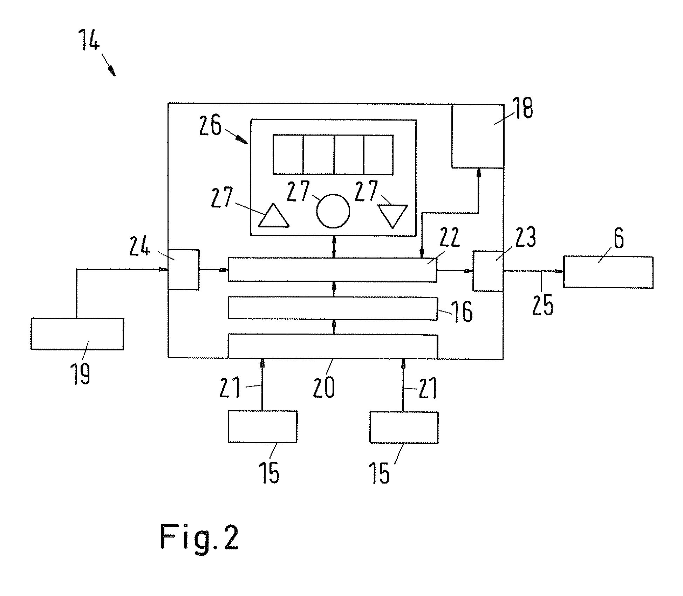

Ein schematischer Aufbau eines erfindungsgemäßen Druckwächters 14 ist in Fig. 2 beschrieben. Der Druckwächter 14 weist zwei Druckmesszellen 15 auf, welche jeweils an einem Analogeingang 20 des Druckwächters 14 angeschlossen sind. Dieser Analogeingang 20 ist mit einem gemeinsamen Messsignalwandler 16 verbunden, mittels welchem die Umwandlung der Messzellen-Rohsignale 21 in Drucksignale sowie zumindest ein Differenzsignal erfolgt.

Ferner ist eine Steuerungseinheit 22 vorgesehen, welche einerseits mit einem Steuerausgang 23 und andererseits mit einem digitalen Eingang 24 verbunden ist. Über den digitalen Eingang 24 kann ein Statussignal des Schmierstoffsensors 19 in den Druckwächter 14 eingelesen werden. Anhand der in der Steuerungseinheit 22 vorhandenen Daten kann über den Steuerausgang 23 ein Steuersignal an die Umsteuerung 6 ausgegeben werden. Alternativ oder zusätzlich kann aus dem Steuerausgang 23 auch ein Steuersignal 25 zur Steuerung einer Pumpe ausgegeben werden. An Stelle oder zusätzlich zu einer Ausgabe über den Steuerausgang 23 kann eine Ausgabe auch über ein Kommunikationsmodul 18 erfolgen, bei welchem es sich um ein Funkmodul handelt. Das Kommunikationsmodul 18 ermöglicht eine Kommunikation mit einem weiteren Druckwächter und/oder mit einer externen Auswertungseinheit. Ebenfalls ermöglicht das Funkmodul eine Fernprogrammierung des Druckwächters 14. Alternativ oder zusätzlich kann eine derartige Programmierung bzw. Einstellung auch mittels einer Anzeige 26 vorgenommen werden, welche dazu entsprechende Einstelltasten 27 aufweist.

### Bezugszeichenliste:

- 1: Schmierstoffverteilersystem
- 2: Schmierstofffass
- 3: Schmierstelle
- 4: Pumpe
- 5: Anschlussleitung
- 6: Umsteuerung
- 7: erste Versorgungsleitung
- 8: zweite Versorgungsleitung
- 9, 9a, 9b: Schmierstoffverteiler
- 10: Einleitungssystem
- 11: Progressivverteiler
- 12: Zweileitungssystem
- 13: Schmierleitung
- 14: Druckwächter
- 15: Druckmesszellen
- 16: Messsignalwandler
- 17: Signalleitung
- 18: Kommunikationsmodul
- 19: Schmierstoffsensor
- 20: Analogeingang
- 21: Druckmesszellen-Rohsignal
- 22: Steuerungseinheit
- 23: Steuerausgang
- 24: digitaler Eingang
- 25: Steuersignal
- 26: Anzeige
- 27: Einstelltasten

## Patentansprüche

1. Druckwächter, insbesondere Enddruckwächtereinheit, mit einem Schmierstoffverteilersystem (1), das mit wenigstens einem Schmierstoffverteiler (9, 9a, 9b) ausgestattet ist, welcher an wenigstens zwei Versorgungsleitungen (7, 8) für die Versorgung des Schmierstoffverteilers (9, 9a, 9b) mit Schmierstoff angeschlossen ist, die an eine mit einer Pumpe (4) druckbeaufschlagbare Umsteuerung (6) zur abwechselnden Druckbeaufschlagung der Versorgungsleitungen (7, 8) angeschlossen sind, **dadurch gekennzeichnet, dass** der Druckwächter (14) wenigstens zwei Druckmesszellen (15) mit einem gemeinsamen Messsignalwandler (16) zur Umwandlung der DruckmesszellenRohsignale (21) in Drucksignale und in mindestens ein Differenzsignal sowie wenigstens einen Eingang (24) zum Anschluss wenigstens eines kapazitiv, mittels Ultraschall oder optisch berührungslos arbeitenden Schmierstoffsensors (19) als Nährungssensor aufweist, welcher zur direkten Kontrolle des Schmierergebnisses und zu einem selbstlernenden Steuerverhalten des Druckwächters (14) verwendet wird.

2. Druckwächter mit einem Schmierstoffverteilersystem nach Anspruch 1, **gekennzeichnet durch** eine Anzeige (26) zur Darstellung der Drucksignale und des Differenzsignals.

3. Druckwächter mit einem Schmierstoffverteilersystem nach Anspruch 1 oder 2, **dadurch gekennzeichnet, dass** der Druckwächter (14) wenigstens ein Kommunikationsmodul (18) zur drahtgebundenen oder drahtlosen Datenübertragung aufweist.

4. Druckwächter mit einem Schmierstoffverteilersystem nach einem der vorhergehenden Ansprüche, **dadurch gekennzeichnet, dass** die Druckmesszellen (15) an jeweils einen Analogeingang (20) des Druckwächters (14) angeschlossen sind.

5. Druckwächter mit einem Schmierstoffverteilersystem nach einem der vorhergehenden Ansprüche, **dadurch gekennzeichnet, dass** der Messsignalwandler (16) ein Analog-Digitalwandler ist.

6. Druckwächter mit einem Schmierstoffverteilersystem nach einem der vorhergehenden Ansprüche, **dadurch gekennzeichnet, dass** die Druckmesszellen (15) Bestandteil eines Differenzdrucksensors sind.

7. Druckwächter mit einem Schmierstoffverteilersystem nach einem der vorhergehenden Ansprüche, **dadurch gekennzeichnet, dass** der Druckwächter (14) wenigstens einen Steuerausgang (23) aufweist.

8. Druckwächter mit einem Schmierstoffverteilersystem nach Anspruch 7, **dadurch gekennzeichnet, dass** der Steuerausgang (23) von einer Steuereinrichtung (22) des Druckwächters (14) mit einem Steuersignal (25) beaufschlagbar ist.

9. Schmierstoffverteilersystem nach Anspruch 1, **dadurch gekennzeichnet, dass** die Druckmesszellen (15) zur Bestimmung wenigstens einer zwischen jeweils zwei Versorgungsleitungen (7, 8) herrschenden Druckdifferenz angeordnet sind.

10. Schmierstoffverteilersystem nach einem der vorhergehenden Ansprüche **dadurch gekennzeichnet, dass** der Schmierstoffsensor (19) an einem, insbesondere digitalen, Eingang (24) des Druckwächters (14) angeschlossen ist.

11. Schmierstoffverteilersystem nach einem der vorhergehenden Ansprüche, **gekennzeichnet durch** mehrere in einer insbesondere drahtlosen Kommunikationsverbindung miteinander stehende Druckwächter (14) oder/und Schmierstoffsensoren (19).

## Claims

1. A pressure monitor, in particular an end pressure monitor unit, with a lubricant distributor system (1), which is provided with at least one lubricant distributor (9, 9a, 9b), which is connected to at least two supply lines (7, 8) for supplying the lubricant distributor (9, 9a, 9b) with lubricant, which supply lines are connected to a reversing control (6), capable of being pressurised by a pump (4), for the alternating pressurisation of the supply lines (7, 8), **characterised in that** the pressure monitor (14) comprises at least two pressure measuring cells (15) with a common measurement signal converter (16) for converting the pressure measuring cell raw signals (21) into pressure signals and into at least one differential signal as well as at least one input (24) for the connection of at least one lubricant sensor (19) as a proximity sensor, which operates capacitively and in a contactless manner by means of ultrasound or optically and which is used for the direct control of the lubrication result and for a self-learning control behaviour of the pressure monitor (14).

2. The pressure monitor with a lubricant distributor system according to claim 1, **characterised by** a display (26) for displaying the pressure signals and the differential signal.

3. The pressure monitor with a lubricant distributor system according to claim 1 or 2, **characterised in that** the pressure monitor (14) comprises at least one communication module (18) for wired or wireless data transmission.

4. The pressure monitor with a lubricant distributor system according to any one of the preceding claims, **characterised in that** the pressure measuring cells (15) are connected in each case to an analog input (20) of the pressure monitor (14).

5. The pressure monitor with a lubricant distributor system according to any one of the preceding claims, **characterised in that** the measurement signal converter (16) is an analog-digital converter.

6. The pressure monitor with a lubricant distributor system according to any one of the preceding claims, **characterised in that** the pressure measuring cells (15) are a component of a differential pressure sensor.

7. The pressure monitor with a lubricant distributor system according to any one of the preceding claims, **characterised in that** the pressure monitor (14) comprises at least one control output (23).

8. The pressure monitor with a lubricant distributor system according to claim 7, **characterised in that** a control signal (25) can be applied by the control device (22) of the pressure monitor (14) to the control output (23).

9. A lubricant distributor system according to claim 1, **characterised in that** the pressure measuring cells (15) are provided for determining at least one pressure difference prevailing between in each case two supply lines (7, 8).

10. The lubricant distributor system according to any one of the preceding claims, **characterised in that** the lubricant sensor (19) is connected to an, in particular digital, input (24) of the pressure monitor (14).

11. The lubricant distributor system according to any one of the preceding claims, **characterised by** a plurality of pressure monitors (14) and/or lubricant sensors (19) in a, in particular, wireless communication connection with one another.

## Revendications

1. Manostat, en particulier, unité de mesure de la pression finale, comprenant un système distributeur de lubrifiant (1) qui est doté d'au moins un distributeur de lubrifiant (9, 9a, 9b), qui est raccordé à au moins deux lignes d'alimentation (7, 8), pour alimenter le distributeur de lubrifiant (9, 9a, 9b) en lubrifiant, qui sont raccordées à un inverseur de marche (6) pouvant être alimenté en pression par une pompe (4) pour l'alimentation en pression alternative des lignes d'alimentation (7, 8), **caractérisé en ce que** le manostat (14) présente au moins deux cellules de mesure de la pression (15) ayant un convertisseur de signal de mesure commun (16) pour convertir les signaux bruts (21) des cellules de mesure de la pression en signaux de pression et en au moins un signal différentiel, ainsi qu'au moins une entrée (24) pour raccorder au moins un capteur de lubrifiant (19) en tant que capteur d'alimentation fonctionnant de manière capacitive par ultrasons ou par optique sans contact, lequel est employé pour le contrôle direct du résultat de graissage et un comportement de commande en auto-apprentissage du manostat (14).

2. Manostat comprenant un système distributeur de lubrifiant selon la revendication 1, **caractérisé par** un affichage (26) pour représenter les signaux de pression et le signal différentiel.

3. Manostat comprenant un système distributeur de lubrifiant selon la revendication 1 ou 2, **caractérisé en ce que** le manostat (14) présente au moins un module de communication (18) pour la transmission de données filaire ou sans fil.

4. Manostat comprenant un système distributeur de lubrifiant selon l'une des revendications précédentes, **caractérisé en ce que** les cellules de mesure de la pression (15) sont raccordées à respectivement une entrée analogique (20) du manostat (14).

5. Manostat comprenant un système distributeur de lubrifiant selon l'une des revendications précédentes, **caractérisé en ce que** le convertisseur de signal de mesure (16) est un convertisseur numérique-analogique.

6. Manostat comprenant un système distributeur de lubrifiant selon l'une des revendications précédentes, **caractérisé en ce que** les cellules de mesure de la pression (15) font partie d'un capteur de pression différentielle.

7. Manostat comprenant un système distributeur de lubrifiant selon l'une des revendications précédentes, **caractérisé en ce que** le manostat (14) présente au moins une sortie de commande (23).

8. Manostat comprenant un système distributeur de lubrifiant selon la revendication 7, **caractérisé en ce que** la sortie de commande (23) peut être alimentée avec un signal de commande (25) par un dispositif de commande (22) du manostat (14).

9. Manostat comprenant un système distributeur de lubrifiant selon la revendication 1, **caractérisé en ce que** les cellules de mesure de la pression (15) sont disposées pour déterminer au moins une différence de pression régnant entre respectivement deux lignes d'alimentation (7, 8).

10. Manostat comprenant un système distributeur de lubrifiant selon l'une des revendications précédentes, **caractérisé en ce que** le capteur de lubrifiant (19) est raccordé à une entrée (24), en particulier numérique, du manostat (14).

11. Manostat comprenant un système distributeur de lubrifiant selon l'une des revendications précédentes, **caractérisé par** plusieurs manostats (14) et/ou capteurs de lubrifiant (19) en liaison de communication entre eux, en particulier sans fil.
